(19) Europäisches Patentamt / European Patent Office / Office européen des brevets

(11) **EP 1 856 978 A1**

(12) **EUROPEAN PATENT APPLICATION**

(43) Date of publication:
**21.11.2007 Bulletin 2007/47**

(51) Int Cl.:
*A01N 43/56* (2006.01)    *A01N 43/653* (2006.01)

(21) Application number: **06008895.2**

(22) Date of filing: **28.04.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Syngenta Participations AG**
**4058 Basel (CH)**

(72) Inventor: **The designation of the inventor has not yet been filed**

(74) Representative: **Hölscher, Ingo et al**
**Syngenta Participations AG**
**Intellectual Property**
**P.O. Box**
**4002 Basel (CH)**

(54) **Fungicidal compositions comprising Penthiopyrad and Cyproconazole**

(57)    A composition for control of phytopathogenic diseases on useful plants, that in addition to inert formulation adjuvants, comprises as active ingredients a component (A) and a synergistically effective amount of a component (B); wherein
component (A) is Cyproconazole; and
component (B) is Penthiopyrad;
with the proviso that if further compounds are present, which act at the $bc_1$ complex of the fungal mitochondrial respiratory electron transfer site, said compounds are selected from group consisiting of Azoxystrobin, Kresoxim-methyl, Dimoxystrobin and Metominostrobin.

EP 1 856 978 A1

**Description**

The present invention relates to novel fungicidal compositions for the treatment of phytopathogenic diseases of useful plants, especially phytopathogenic fungi, and to a method of controlling phytopathogenic diseases on useful plants.

Cyproconazole (2-(4-chlorophenyl)-3-cyclopropyl-1-(1H-1,2,4-triazol-1-yl)butan-2-ol), is a steroid demethylation inhibitor (ergosterol biosynthesis inhibitor) and is used as a fungicide which is effective against a number of diseases caused by Ascomycetes, Basidiomycetes and Deuteromycetes.

Penthiopyrad (N-[2-(1,3-dimethylbutyl)-3-thienyl]-1-methyl-3-(trifluoromethyl)-1H-pyrazole-4-carboxamide) is a fungicide which is effective against a number of diseases caused by Ascomycetes, Basidiomycetes and Deuteromycetes. Mixtures of Penthiopyrad with compounds, which act at the $bc_1$ complex of the fungal mitochondrial respiratory electron transfer site, are described in WO 2006/036827.

Crop tolerance and activity against phytopathogenic plant fungi of both fungicides do not always satisfy the needs of agricultural practice in many incidents and aspects.

Out of the above-mentioned needs of agricultural practice for increased crop tolerance and/or increased activity against phytopathogenic plant fungi, there is therefore proposed in accordance with the present invention a novel synergistic composition for control of phytopathogenic diseases on useful plants, that in addition to inert formulation adjuvants, comprises as active ingredients a component (A) and a synergistically effective amount of a component (B); wherein

    component (A) is Cyproconazole; and
    component (B) is Penthiopyrad;

with the proviso that if further compounds are present, which act at the $bc_1$ complex of the fungal mitochondrial respiratory electron transfer site, said compounds are selected from group consisiting of Azoxystrobin, Kresoxim-methyl, Dimoxystrobin and Metominostrobin.

It has now been found, surprisingly, that the mixture of component (A) and component (B) not only brings about the additive enhancement of the spectrum of action with respect to the phytopathogen to be controlled that was in principle to be expected but achieves a synergistic effect which extends the range of action of component (A) and component (B) in two ways. Firstly, the rates of application of component (A) and component (B) are lowered whilst the action remains equally good. Secondly, the active ingredient mixture still achieves a high degree of phytopathogen control even where the two individual components have become totally ineffective in such a low application rate range. This allows, on the one hand, a substantial broadening of the spectrum of phytopathogens that can be controlled and, on the other hand, increased safety in use.

However, besides the actual synergistic action with respect to fungicidal activity, the pesticidal compositions according to the invention can also have further surprising advantageous properties which can also be described, in a wider sense, as synergistic activity. Examples of such advantageous properties that may be mentioned are: a broadening of the spectrum of fungicidal activity to other phytopathogens, for example to resistant strains; improved vapour activity; improved curativity; improved rainfastness; a reduction in the rate of application of the active ingredients; more advantageous degradability; improved toxicological and/or ecotoxicological behaviour; or improved characteristics of the useful plants including: crop yields, more developed root system, tillering increase, increase in plant height, bigger leaf blade, less dead basal leaves, stronger tillers, greener leaf colour, less fertilizers needed, more productive tillers, earlier flowering, early grain maturity, less plant verse (lodging), increased shoot growth and improved plant vigor.

Cyproconazole and Penthiopyrad are described in "The Pesticide Manual" [The Pesticide Manual - A World Compendium; Thirteenth Edition; Editor: C. D. S. Tomlin; The British Crop Protection Council] under entry numbers (207) and (1962), respectively. http://www/ Penthiopyrad and Cyproconazole can exist in different stereoisomeric forms. The invention covers mixtures comprising all those stereoisomeric forms or mixtures of those stereoisomeric forms in any ratio.

Throughout this document the expression "composition" stands for the various mixtures or combinations of component (A) and component (B), for example in a single "ready-mix" form, in a combined spray mixture composed from separate formulations of the single active ingredient components, such as a "tank-mix", and in a combined use of the single active ingredients when applied in a sequential manner, i.e. one after the other with a reasonably short period, such as a few hours or days. The order of applying component (A) and component (B) is not essential for working the present invention.

The compositions according to the invention may comprise one or more additional active ingredient, such as a fungicide, insecticide, herbicide or growth regulator.

If compositions according to the invention comprise, besides Cyproconazole and Penthiopyrad, a further active ingredient and said active ingredient acts at the $bc_1$ complex of the fungal mitochondrial respiratory electron transfer site, said further active ingredient is selected from group consisiting of Azoxystrobin, Kresoxim-mothyl, Dimoxystrobin and Metominostrobin. Azoxystrobin, Kresoxim-methyl, Dimoxystrobin and Metominostrobin are described in "The Pesticide Manual" [The Pesticide Manual - A World Compendium; Thirteenth Edition; Editor: C. D. S. Tomlin; The British Crop Protection Council] under entry numbers (47), (485), (226) and (551), respectively.

Strobilurin fungicides, such as Azoxystrobin, Kresoxim-methyl, Dimoxystrobin and Metominostrobin, and the related fungicides famoxadone and fenamidone are known to have a fungicidal mode of action which inhibits the $bc_1$ complex of the fungal mitochondrial respiratory electron transfer site (Angew. Chem. Int. Ed. 1999, 38, 1328-1349 and Pest Management Science 2002, 58, 649-662). The $bc_1$ complex is sometimes referred to by other names in the biochemical literature, including complex III of the electron transfer chain and ubihydroquinone:cytochrome c oxidoreductase. It is uniquely identified by the Enzyme Commission number EC1.10.2.2. The The $bc_1$ complex is described in, for example, J. Biol. Chem. 1989, 264, 14543-4-8; Methods Enzymol. 1986, 126, 253-71; and references cited therein.

In one embodiment, the invention provides a composition for control of phytopathogenic diseases on useful plants, that in addition to inert formulation adjuvants, comprises as active ingredients a component (A) and a synergistically effective amount of a component (B); wherein

component (A) is Cyproconazole; and
component (B) is Penthiopyrad;

with the exception of
compositions having as active ingredient a mixture comprising Cyproconazole, Penthiopyrad and a compound, which acts at the $bc_1$ complex of the fungal mitochondrial respiratory electron transfer site.

In one embodiment of the invention, the compositions according to the invention do not comprise an additional active ingredient. This embodiment provides a composition for control of phytopathogenic diseases on useful plants, that in addition to inert formulation adjuvants, comprises an active ingredient, which consists essentially of a component (A) and a synergistically effective amount of a component (B); wherein

component (A) is Cyproconazole; and
component (B) is Penthiopyrad.

Within this embodiment, preferably, the active ingredient consists of a component (A) and a synergistically effective amount of a component (B); wherein

component (A) is Cyproconazole; and
component (B) is Penthiopyrad.

The compositions according to the invention are effective against harmful microorganisms, such as microorganisms, that cause phytopathogenic diseases, in particular against phytopathogenic fungi and bacteria.

The compositions according to the invention are effective especially against phytopathogenic fungi belonging to the following classes: Ascomycetes (e.g. Venturia, Podosphaera, Erysiphe, Monilinia, Mycosphaerella, Uncinula); Basidiomycetes (e.g. the genus Hemileia, Rhizoctonia, Phakopsora, Puccinia, Ustilago, Tilletia); Fungi imperfecti (also known as Deuteromycetes; e.g. Botrytis, Helminthosporium, Rhynchosporium, Fusarium, Septoria, Cercospora, Alternaria, Pyricularia and Pseudocercosporella).

According to the invention "useful plants" typically comprise the following species of plants:

grape vines; cereals, such as wheat, barley, rye or oats; beet, such as sugar beet or fodder beet; fruits, such as pomes, stone fruits or soft fruits, for example apples, pears, plums, peaches, almonds, cherries, strawberries, raspberries or blackberries; leguminous plants, such as beans, lentils, peas or soybeans; oil plants, such as rape, mustard, poppy, olives, sunflowers, coconut, castor oil plants, cocoa beans or groundnuts; cucumber plants, such as marrows, cucumbers or melons; fibre plants, such as cotton, flax, hemp or jute; citrus fruit, such as oranges, lemons, grapefruit or mandarins; vegetables, such as spinach, lettuce, asparagus, cabbages, carrots, onions, tomatoes, potatoes, cucurbits or paprika; lauraceae, such as avocados, cinnamon or camphor; maize; tobacco; nuts; coffee; sugar cane; tea; vines; hops; durian; bananas; natural rubber plants; turf or ornamentals, such as flowers, shrubs, broad-leaved trees or evergreens, for example conifers. This list does not represent any limitation.

The term "useful plants" is to be understood as including also useful plants that have been rendered tolerant to herbicides like bromoxynil or classes of herbicides (such as, for example, HPPD inhibitors, ALS inhibitors, for example primisulfuron, prosulfuron and trifloxysulfuron, EPSPS (5-enol-pyrovyl-shikimate-3-phosphate-synthase) inhibitors, GS (glutamine synthetase) inhibitors or PPO (protoporphyrinogen-oxidase) inhibitors) as a result of conventional methods of breeding or genetic engineering An example of a crop that has been rendered tolerant to imidazolinones, e.g. imazamox, by conventional methods of breeding (mutagenesis) is Clearfield® summer rape (Canola). Examples of crops that have been rendered tolerant to herbicides or classes of herbicides by genetic engineering methods include glyphosate- and glufosinate-resistant maize varieties commercially available under the trade names RoundupReady®, Herculex I® and LibertyLink®.

The term "useful plants" is to be understood as including also useful plants which have been so transformed by the use of recombinant DNA techniques that they are capable of synthesising one or more selectively acting toxins, such as are known, for example, from toxin-producing bacteria, especially those of the genus Bacillus.

Toxins that can be expressed by such transgenic plants include, for example, insecticidal proteins, for example insecticidal proteins from Bacillus cereus or Bacillus popliae; or insecticidal proteins from Bacillus thuringiensis, such as δ-endotoxins, e.g. CryIA(b), CryIA(c), CryIF, CryIF(a2), CryIIA(b), CryIIIA, CryIIIB(b1) or Cry9c, or vegetative insecticidal proteins (VIP), e.g. VIP1, VIP2, VIP3 or VIP3A; or insecticidal proteins of bacteria colonising nematodes, for example Photorhabdus spp. or Xenorhabdus spp., such as Photorhabdus luminescens, Xenorhabdus nematophilus; toxins produced by animals, such as scorpion toxins, arachnid toxins, wasp toxins and other insect-specific neurotoxins; toxins produced by fungi, such as Streptomycetes toxins, plant lectins, such as pea lectins, barley lectins or snowdrop lectins; agglutinins; proteinase inhibitors, such as trypsine inhibitors, serine protease inhibitors, patatin, cystatin, papain inhibitors; ribosome-inactivating proteins (RIP), such as ricin, maize-RIP, abrin, luffin, saporin or bryodin; steroid metabolism enzymes, such as 3-hydroxysteroidoxidase, ecdysteroid-UDP-glycosyl-transferase, cholesterol oxidases, ecdysone inhibitors, HMG-COA-reductase, ion channel blockers, such as blockers of sodium or calcium channels, juvenile hormone esterase, diuretic hormone receptors, stilbene synthase, bibenzyl synthase, chitinases and glucanases.

In the context of the present invention there are to be understood by δ-endotoxins, for example CryIA(b), CryIA(c), CryIF, CryIF(a2), CryIIA(b), CryIIIA, CryIIIB(b1) or Cry9c, or vegetative insecticidal proteins (VIP), for example VIP1, VIP2, VIP3 or VIP3A, expressly also hybrid toxins, truncated toxins and modified toxins. Hybrid toxins are produced recombinantly by a new combination of different domains of those proteins (see, for example, WO 02/15701). An example for a truncated toxin is a truncated CryIA(b), which is expressed in the Bt11 maize from Syngenta Seed SAS, as described below. In the case of modified toxins, one or more amino acids of the naturally occurring toxin are replaced. In such amino acid replacements, preferably non-naturally present protease recognition sequences are inserted into the toxin, such as, for example, in the case of CryIIIA055, a cathepsin-D-recognition sequence is inserted into a CryIIIA toxin (see WO 03/018810)

Examples of such toxins or transgenic plants capable of synthesising such toxins are disclosed, for example, in EP-A-0 374 753, WO 93/07278, WO 95/34656, EP-A-0 427 529, EP-A-451 878 and WO 03/052073.

The processes for the preparation of such transgenic plants are generally known to the person skilled in the art and are described, for example, in the publications mentioned above. Cryl-type deoxyribonucleic acids and their preparation are known, for example, from WO 95/34656, EP-A-0 367 474, EP-A-0 401 979 and WO 90/13651.

The toxin contained in the transgenic plants imparts to the plants tolerance to harmful insects Such insects can occur in any taxonomic group of insects, but are especially commonly found in the beetles (Coleoptera), two-winged insects (Diptera) and butterflies (Lepidoptera).

Transgenic plants containing one or more genes that code for an insecticidal resistance and express one or more toxins are known and some of them are commercially available Examples of such plants are: YieldGard® (maize variety that expresses a CryIA(b) toxin); YieldGard Rootworm® (maize variety that expresses a CryIIIB(b1) toxin); YieldGard Plus® (maize variety that expresses a CryIA(b) and a CryIIIB(b1) toxin); Starlink® (maize variety that expresses a Cry9(c) toxin); Herculex I® (maize variety that expresses a CryIF(a2) toxin and the enzyme phosphinothricine N-acetyltransferase (PAT) to achieve tolerance to the herbicide glufosinate ammonium); NuCOTN 33B® (cotton variety that expresses a CryIA(c) toxin); Bollgard I® (cotton variety that expresses a CryIA(c) toxin); Bollgard II® (cotton variety that expresses a CryIA(c) and a CryIIA(b) toxin); VIPCOT® (cotton variety that expresses a VIP toxin); NewLeaf® (potato variety that expresses a CryIIIA toxin); Nature-Gard® and Protecta®.

Further examples of such transgenic crops are:

1. **Bt11 Maize** from Syngenta Seeds SAS, Chemin de l'Hobit 27, F-31 790 St. Sauveur, France, registration number C/FR/96/05/10. Genetically modified *Zea mays* which has been rendered resistant to attack by the European corn borer *(Ostrinia nubilalis* and *Sesamia nonagrioides)* by transgenic expression of a truncated CryIA(b) toxin, Bt11 maize also transgenically expresses the enzyme PAT to achieve tolerance to the herbicide glufosinate ammonium.

2. **Bt176 Maize** from Syngenta Seeds SAS, Chemin de l'Hobit 27, F-31 790 St. Sauveur, France, registration number C/FR/96/05/10. Genetically modified *Zea mays* which has been rendered resistant to attack by the European corn borer (*Ostrinia nubilalis* and *Sesamia nonagrioides*) by transgenic expression of a CryIA(b) toxin. Bt176 maize also transgenically expresses the enzyme PAT to achieve tolerance to the herbicide glufosinate ammonium.

3. **MIR604 Maize** from Syngenta Seeds SAS, Chemin de l'Hobit 27, F-31 790 St. Sauveur, France, registration number C/FR/96/05/10. Maize which has been rendered insect-resistant by transgenic expression of a modified CryIIIA toxin. This toxin is Cry3A055 modified by insertion of a cathepsin-D-protease recognition sequence. The preparation of such transgenic maize plants is described in WO 03/018810.

4. **MON 863 Maize** from Monsanto Europe S.A. 270-272 Avenue de Tervuren, B-1150 Brussels, Belgium, registration number C/DE/02/9. MON 863 expresses a CryIIIB(b1) toxin and has resistance to certain Coleoptera insects.

5. **IPC 531 Cotton** from Monsanto Europe S.A. 270-272 Avenue de Tervuren, B-1150 Brussels, Belgium, registration number C/ES/96/02.

6. **1507 Maize** from Pioneer Overseas Corporation, Avenue Tedesco, 7 B-1160 Brussels, Belgium, registration number C/NL/00/10. Genetically modified maize for the expression of the protein Cry1 F for achieving resistance to certain Lepidoptera insects and of the PAT protein for achieving tolerance to the herbicide glufosinate ammonium.

7. **NK603 x MON 810 Maize** from Monsanto Europe S.A. 270-272 Avenue de Tervuren, B-1150 Brussels, Belgium, registration number C/GB/02/M3/03. Consists of conventionally bred hybrid maize varieties by crossing the genetically modified varieties NK603 and MON 810. NK603 x MON 810 Maize transgenically expresses the protein CP4 EPSPS, obtained from *Agrobacterium sp.* strain CP4, which imparts tolerance to the herbicide Roundup® (contains glyphosate), and also a CrylA(b) toxin obtained from *Bacillus thuringiensis subsp. kurstaki* which brings about tolerance to certain Lepidoptera, include the European corn borer.

Transgenic crops of insect-resistant plants are also described in BATS (Zentrum für Biosicherheit und Nachhaltigkeit, Zentrum BATS, Clarastrasse 13, 4058 Basel, Switzerland) Report 2003, (http://bats.ch).

The term "useful plants" is to be understood as including also useful plants which have been so transformed by the use of recombinant DNA techniques that they are capable of synthesising antipathogenic substances having a selective action, such as, for example, the so-called "pathogenesis-related proteins" (PRPs, see e.g. EP-A-0 392 225). Examples of such antipathogenic substances and transgenic plants capable of synthesising such antipathogenic substances are known, for example, from EP-A-0 392 225, WO 95133818, and EP-A-0 353191. The methods of producing such transgenic plants are generally known to the person skilled in the art and are described, for example, in the publications mentioned above.

Antipathogenic substances which can be expressed by such transgenic plants include, for example, ion channel blockers, such as blockers for sodium and calcium channels, for example the viral KP1, KP4 or KP6 toxins; stilbene synthases; bibenzyl synthases; chitinases; glucanases; the so-called "pathogenesis-related proteins" (PRPs; see e.g. EP-A-0 392 225); antipathogenic substances produced by microorganisms, for example peptide antibiotics or heterocyclic antibiotics (see e.g. WO 9513381$) or protein or polypeptide factors involved in plant pathogen defence (so-called "plant disease resistance genes", as described in WO 03/000906).

The term "locus" of a useful plant as used herein is intended to embrace the place on which the useful plants are growing, where the plant propagation materials of the useful plants are sown or where the plant propagation materials of the useful plants will be placed into the soil. An example for such a locus is a field, on which crop plants are growing.

The compositions according to the invention are particularly useful for controlling the following plant diseases on useful plants:

Alternaria species in fruit and vegetables;
Ascochyta species in pulse crops;
Botrytis cinerea in strawberries, tomatoes, sunflower, pulse crops, vegetables and grapes, such as Botrytis cinerea on grape;
Cercospora arachidicola in peanuts;
Cochliobolus sativus in cereals;
Colletotrichum species in pulse crops;
Erysiphe species in cereals; such as Erysiphe graminis on wheat and Erysiphe graminis on barley;
Erysiphe cichoracearum and Sphaerotheca fuliginea in cucurbits;
Fusarium species in cereals and maize;
Gäumannomyces graminis in cereals and lawns;
Helminthosporium species in maize, rice and potatoes;
Hemileia vastatrix on coffee;
Microdochium species in wheat and rye;
Mycosphaerella fijiensis in banana;
Phakopsora species in soybeans, such as Phakopsora pachyrizi in soybeans;
Puccinia species in cereals, broadleaf crops and perennial plants; such as Puccinia recondita on wheat, Puccinia striiformis on wheat and Puccinia recondita on barley; Pseudocercosporella species in cereals, such as Pseudocercosporella herpotrichoides in wheat;
Phragmidium mucronatum in roses;
Podosphaera species in fruits;
Pyrenophora species in barley, such as Pyrenophora teres on barley;

Pyricularia oryzae in rice;

Ramularia collo-cygni in barley;

Rhizoctonia species in cotton, soybean, cereals, maize, potatoes, rice and lawns, such as Rhizoctonia solani on potato, rice, turf and cotton;

Rhynchosporium secalis on barley, Rhynchosporium secalis on rye;

Sclerotinia species in lawns, lettuce, vegetables and oil seed rape, such as Sclerotinia sclerotiorum on oilseed rape and Sclerotinia homeocarpa on turf;

Septoria species in cereals, soybean and vegetables, such as Septoria tritici on wheat, Septoria nodorum on wheat and Septoria glycines on soybean;

Sphacelotheca reilliana in maize;

Tilletia species in cereals;

Uncinula necator, Guignardia bidwellii and Phomopsis viticola in vines;

Urocystis occulta in rye;

Uromyces species in beans;

Ustilago species in cereals and maize;

Venturia species in fruits, such as Venturia inequalis on apple;

Monilinia species on fruits;

Penicillium species on citrus and apples.

The amount of a composition according to the invention to be applied, will depend on various factors, such as the compounds employed; the subject of the treatment, such as, for example plants or soil; the type of treatment, such as, for example spraying or dusting; the purpose of the treatment, such as, for example prophylactic or therapeutic; the type of fungi to be controlled or the application time.

It has been found that the use of component (B) in combination with component (A) surprisingly and substantially enhance the effectiveness of the latter against fungi, and vice versa. Additionally, the method of the invention is effective against a wider spectrum of such fungi that can be combated with the active ingredients of this method, when used solely.

The weight ratio of component (A) to component (B) is so selected as to give a synergistic activity. In general the weight ratio of component (A) to component (B) is from 50 : 1 to 1 : 50, preferably from 10 : 1 to 1: 10, more preferably from 5 : 1 to 1 : 5.

The synergistic activity of the compositions according to the invention is apparent from the fact that the fungicidal activity of the composition of component (A) and component (B) is greater than the sum of the fungicidal activities of component (A) and component (B).

The method of the invention comprises applying to the useful plants or the locus thereof in admixture or separately, a composition according to the invention.

The compositions according to the invention have a systemic action and can be used as foliar or soil fungicides.

With the compositions according to the invention it is possible to inhibit or destroy the phytopathogenic microorganisms which occur in plants or in parts of plants (fruit, blossoms, leaves, stems, tubers, roots) in different useful plants, while at the same time the parts of plants which grow later are also protected from attack by phytopathogenic microorganisms.

The compositions according to the invention are applied by treating the fungi, the useful plants or the locus thereof with a composition according to the invention.

The compositions according to the invention may be applied before or after infection of the useful plants by the fungi.

When applied to the useful plants component (A) is applied at a rate of 10 to 500 g a.i./ha, particularly 20 to 200 g a.i./ha, e.g. 20, 50, 80, 100 or 200 g a.i./ha, in association with 10 to 500 g a.i./ha, particularly 50 to 150 g a.i./ha, e.g. 50, 75, 100, 150 g a.i./ha of component (B).

In agricultural practice the application rates of the compositions according to the invention depend on the type of effect desired, and typically range from 50 to 500 g of total composition per hectare.

The composition of the invention may be employed in any conventional form, for example in the form of a twin pack, an emulsion concentrate (EC), a suspension concentrate (SC), a suspo-emulsion (SE), a capsule suspension (CS), a water dispersible granule (WG), an emulsifiable granule (EG), an emulsion, water in oil (EO), an emulsion, oil in water (EW), a micro-emulsion (ME), an oil dispersion (OD), an oil miscible flowable (OF), an oil miscible liquid (OL), a soluble concentrate (SL), an ultra-low volume suspension (SU), an ultra-low volume liquid (UL), a technical concentrate (TK), a dispersible concentrate (DC), a wettable powder (WP) or any technically feasible formulation in combination with agriculturally acceptable adjuvants.

Such compositions may be produced in conventional manner, e.g. by mixing the active ingredients with appropriate inert formulation adjuvants (diluents, solvents, fillers and optionally other formulating ingredients such as surfactants, biocides, anti-freeze, stickers, thickeners and compounds that provide adjuvancy effects). Also conventional slow release formulations may be employed where long lasting efficacy is intended. Particularly formulations to be applied in spraying forms, such as water dispersible concentrates (e.g. EC, SC, DC, OD, SE, EW, EO and the like), wettable powders and granules, may contain surfactants such as wetting and dispersing agents and other compounds that provide adjuvancy effects, e.g. the condensation product of formaldehyde with naphthalene sulphonate, an alkylarylsulphonate, a lignin sulphonate, a fatty alkyl sulphate, and ethoxylated alkylphenol and an ethoxylated fatty alcohol.

In general, the formulations include from 0.01 to 90% by weight of active agent, from 0 to 20% agriculturally acceptable surfactant and 10 to 99.99% solid or liquid formulation inerts and adjuvant(s), the active agent consisting of at least component (A) together with component (B), and optionally other active agents, particularly microbiocides or conservatives or the like. Concentrated forms of compositions generally contain in between about 2 and 80%, preferably between about 5 and 70% by weight of active agent. Application forms of formulation may for example contain from 0.01 to 20% by weight, preferably from 0.01 to 5% by weight of active agent. Whereas commercial products will preferably be formulated as concentrates, the end user will normally employ diluted formulations.

The Examples which follow serve to illustrate the invention, "active ingredient" denoting a mixture of Cyproconazole (component A) and Penthiopyrad (component B) in a specific mixing ratio.

Formulation Examples

| Wettable powders | a) | b) | c) |
|---|---|---|---|
| active ingredient [A): B) = 1:3(a), 1:2(b), 1:1 (c)] | 25 % | 50 % | 75 % |
| sodium lignosulfonate | 5 % | 5 % | - |
| sodium lauryl sulfate | 3 % | - | 5 % |
| sodium diisobutylnaphthalenesulfonate | - | 6 % | 10 % |
| phenol polyethylene glycol ether (7-8 mol of ethylene oxide) | - | 2 % | - |
| highly dispersed silicic acid | 5 % | 10 % | 10 % |
| Kaolin | 62 % | 27 % | - |

The active ingredient is thoroughly mixed with the adjuvants and the mixture is thoroughly ground in a suitable mill, affording wettable powders that can be diluted with water to give suspensions of the desired concentration.

| Emulsifiable concentrate | |
|---|---|
| active ingredient (A): B) = 1:5) | 10 % |
| octylphenol polyethylene glycol ether (4-5 mol of ethylene oxide) | 3 % |
| calcium dodecylbenzenesulfonate | 3 % |
| castor oil polyglycol ether (35 mol of ethylene oxide) | 4 % |
| Cyclohexanone | 30 % |
| xylene mixture | 50 % |

Emulsions of any required dilution, which can be used in plant protection, can be obtained from this concentrate by dilution with water.

| Dusts | a) | b) | c) |
|---|---|---|---|
| Active ingredient [A) : B) = 1:5(a), 1:2(b), 1:10(c)] | 5 % | 6 % | 4 % |
| Talcum | 95% | - | - |
| Kaolin | - | 94% | - |
| mineral filler | - | - | 96 % |

Ready-for-use dusts are obtained by mixing the active ingredient with the carrier and grinding the mixture in a suitable mill.

| Extruder granules | |
|---|---|
| Active ingredient (A) : B) = 2:1) | 15 % |

(continued)

| Extruder granules | |
| --- | --- |
| sodium lignosulfonate | 2 % |
| carboxymethylcellulose | 1 % |
| Kaolin | 82 % |

The active ingredient is mixed and ground with the adjuvants, and the mixture is moistened with water. The mixture is extruded and then dried in a stream of air.

| Coated granules | |
| --- | --- |
| Active ingredient (A) : B) = 1:5) | 8 % |
| polyethylene glycol (mol. wt. 200) | 3 % |
| Kaolin | 89 % |

The finely ground active ingredient is uniformly applied, in a mixer, to the kaolin moistened with polyethylene glycol, Non-dusty coated granules are obtained in this manner.

| Suspension concentrate | |
| --- | --- |
| active ingredient (A) : B) = 1:5) | 40 % |
| propylene glycol | 10 % |
| nonylphenol polyethylene glycol ether (15 mol of ethylene oxide) | 6 % |
| Sodium lignosulfonate | 10 % |
| carboxymethylcellulose | 1 % |
| silicone oil (in the form of a 75 % emulsion in water) | 1 % |
| Water | 32 % |

The finely ground active ingredient is intimately mixed with the adjuvants, giving a suspension concentrate from which suspensions of any desired dilution can be obtained by dilution with water. Using such dilutions, living plants can be treated and protected against infestation by microorganisms, by spraying, pouring or immersion.

A further aspect of the instant invention is a method of controlling phytopathogenic diseases on useful plants, which comprises applying to the useful plants or the locus thereof a composition according to the invention.

A further aspect of the instant invention is a method of controlling phytopathogenic diseases on useful plants, which comprises applying to the useful plants a composition according to the invention.

A further aspect of the instant invention is a method of controlling phytopathogenic diseases on cereal plants, which comprises applying to the cereal plants or to the locus thereof a composition according to the invention; prefered cereal plants are wheat or barley.

Within this embodiment, further prefered is a method of controlling phytopathogenic diseases on wheat plants, which comprises applying to the wheat plants or to the locus thereof a composition according to the invention, wherein the phytopathogenic disease is a disease selected from the group consisting of Erysiphe graminis, Pseudocercosporella herpotrichoides, Puccinia recondita, Puccinia striiformis, Pyrenophora tritici-repentis and Septoria tritici. Within this embodiment, further prefered is a method of controlling Septoria tritici on wheat plants, which comprises applying to the wheat plants or to the locus thereof a composition according to the invention. Also further prefered is a method of controlling Puccinia recondita on wheat plants, which comprises applying to the wheat plants or to the locus thereof a composition according to the invention.

Further prefered is a method of controlling phytopathogenic diseases on barley plants, which comprises applying to the barley plants or to the locus thereof a composition according to the invention, wherein the phytopathogenic disease is a disease selected from the group consisting of Erysiphe graminis, Puccinia recondita, Pyrenophora teres, Ramularia collo-cygni and Rhynchosporium secalis; prefered is a method, wherein the phytopathogenic disease is Puccinia recondita.

Biological Examples

A synergistic effect exists whenever the action of an active ingredient combination is greater than the sum of the actions of the individual components.

The action to be expected E for a given active ingredient combination obeys the so-called COLBY formula and can be calculated as follows (COLBY, S.R. "Calculating synergistic and antagonistic responses of herbicide combination". Weeds, Vol. 15, pages 20-22; 1967):

ppm = milligrams of active ingredient (= a.i.) per liter of spray mixture
X = % action by active ingredient A) using p ppm of active ingredient
Y = % action by active ingredient B) using q ppm of active ingredient.

According to COLBY, the expected (additive) action of active ingredients A)+B) using p+q ppm of active ingredient is

$$E = X + Y - \frac{X \cdot Y}{100}$$

If the action actually observed (O) is greater than the expected action (E), then the action of the combination is super-additive, i.e. there is a synergistic effect. In mathematical terms the synergism factor SF corresponds to O/E. In the agricultural practice an SF of $\geq 1.2$ indicates significant improvement over the purely complementary addition of activities (expected activity), while an SF of $\leq 0.9$ in the practical application routine signals a loss of activity compared to the expected activity.

Example B-1: Action against Puccinia: recondita (Brown rust) on wheat

a) Protective Treatment of leaf segments

Wheat leaf segments are placed on agar in multiwell plates (24-well format) and sprayed with test solutions. After drying, the leaf disks are inoculated with a spore suspension of the fungus. After appropriate incubation the activity of a compound is assessed 9 days after inoculation as preventive fungicidal activity. The fungicide interactions in the combinations are calculated according to COLBY method.

b) Protective Treatment of plants

1 week old wheat plants cv. Arina are treated with the formulated test compound (0.02% active ingredient) in a spray chamber. One day after application, the wheat plants are inoculated by spraying a spore suspension ($1\times10^5$ uredospores/ml) on the test plants:
After an incubation period of 2 days at 20°C and 95% relative humidity the plants are kept in a greenhouse for 8 days at 20°C and 60% relative humidity. The disease incidence is assessed 10 days after inoculation. The fungicide interactions in the combinations are calculated according to COLBY method.

Example B-2: Action against Septoria tritici on wheat

a) Fungal growth assay

Conidia of the fungus from cryogenic storage are directly mixed into nutrient broth (PDB potato dextrose broth). After placing a (DMSO) solution of the test compounds into a microtiter plate (96-well format) the nutrient broth containing the fungal spores is added. The test plates are incubated at 24°C and the inhibition of growth is determined photometrically after 72 hrs. The fungicide interactions in the combinations are calculated according to COLBY method.

b) Protective Treatment

2 week old wheat plants cv. Riband are treated with the formulated test compound (0.2% active ingredient) in a spray chamber. One day after application, wheat plants are inoculated by spraying a spore suspension ($10\times10^5$ conidia/ml) on the test plants. After an incubation period of 1 day at 23°C and 95% relative humidity, the plants are kept for 16 days at 23°C and 60% relative humidity in a greenhouse. The disease incidence is assessed 18 days after inoculation. The fungicide interactions in the combinations are calculated according to COLBY method.

Example B-3: Action against Alternaria solani (early blight)

a) Fungal growth assay

Conidia -harvested from a freshly grown colony- of the fungus are directly mixed into nutrient broth (PDB potato dextrose broth). After placing a (DMSO) solution of the test compounds into a microtiter plate (96-well format) the nutrient broth containing the fungal spores is added. The test plates are incubated at 24°C and the inhibition of growth is determined photometrically after 48 hrs. The fungicide interactions in the combinations are calculated according to COLBY method.

b) Protective Treatment

4 week old tomato plants cv. Roter Gnom are treated with the formulated test compound (0.02% active ingredient) in a spray chamber. Two days after application, the tomato plants are inoculated by spraying a spore suspension ($2x10^5$conidia/ml) on the test plants. After an incubation period of 3 days at 20°C and 95% relative humidity in a growth chamber the disease incidence is assessed. The fungicide interactions in the combinations are calculated according to COLBY method.

Example B-4: Action against Pyrenophora teres (Net blotch)

a) Fungal growth assay

Conidia of the fungus from cryogenic storage are directly mixed into nutrient broth (PDB potato dextrose broth). After placing a (DMSO) solution of the test compounds into a microtiter plate (96-well format) the nutrient broth containing the fungal spores is added. The test plates are incubated at 24°C and the inhibition of growth is determined photometrically after 48 hrs. The fungicide interactions in the combinations are calculated according to COLBY method.

b) Protective Treatment

Barley leaf segments are placed on agar in multiwell plates (24-well formal) and sprayed with test solutions. After drying, the leaf disks are inoculated with a spore suspension of the fungus. After appropriate incubation the activity of a compound is assessed 96 hrs after inoculation as preventive fungicidal activity. The fungicide interactions in the combinations are calculated according to COLBY method.

Example B-5: Action against Erysiphe graminis f.sp. hordei (Barley powdery mildew) on barley- protective treatment

Barley leaf segments are placed on agar in multiwell plates (24-well format) and sprayed with test solutions. After drying, the leaf disks are inoculated with a spore suspension of the fungus. After appropriate incubation the activity of a compound is assessed 96 hrs after inoculation as preventive fungicidal activity. The fungicide interactions in the combinations are calculated according to COLBY method.

Example B-6: Action against Erysiphe graminis f.sp. tritici (Wheat powdery mildew on barley - protective treatment

Barley leaf segments are placed on agar in multiwell plates (24-well format) and sprayed with test solutions. After drying, the leaf disks are inoculated with a spore suspension of the fungus. After appropriate incubation the activity of a compound is assessed 96 hrs after inoculation as preventive fungicidal activity. The fungicide interactions in the combinations are calculated according to COLBY method.

Example B-7: Action against Septoria nodorum on wheat

a) Protective Treatment of leaf segments

Wheat leaf segments are placed on agar in multiwell plates (24-well format) and sprayed with test solutions. After drying, the leaf disks are inoculated with a spore suspension of the fungus. After appropriate incubation the activity of a compound is assessed 96 hrs after inoculation as preventive fungicidal activity. The fungicide interactions in the combinations are calculated according to COLBY method.

b) Protective Treatment of plants

1 week old wheat plants cv. Arina are treated with the formulated test compound (0.02% active ingredient) in a spray chamber. One day after application, the wheat plants are inoculated by spraying a spore suspension $(5\times10^5$conidia/ml) on the test plants. After an incubation period of 1 day at 20°C and 95% relative humidity the plants are kept for 10 days at 20°C and 60% relative humidity in a greenhouse. The disease incidence is assessed 11 days after inoculation. The fungicide interactions in the combinations are calculated according to COLBY method.

Example B-8: Action against Podosphaera leucotricha (Powdery mildew) on apple - protective treatment

5 week old apple seedlings cv. McIntosh are treated with the formulated test compound (0.02% active ingredient) in a spray chamber. One day after, the application apple plants are inoculated by shaking plants infected with apple powdery mildew above the test plants. After an incubation period of 12 days at 22°C and 60% relative humidity under a light regime of 14/l0hours (light/dark) the disease incidence is assessed. The fungicide interactions in the combinations are calculated according to COLBY method.
The compositions according to the invention exhibit good activity in all of the above examples.

**Claims**

1.   A composition for control of phytopathogenic diseases on useful plants, that in addition to inert formulation adjuvants, comprises as active ingredients a component (A) and a synergistically effective amount of a component (B); wherein

      component (A) is Cyproconazole; and
      component (B) is Penthiopyrad;

   with the proviso that if further compounds are present, which act at the $bc_1$ complex of the fungal mitochondrial respiratory electron transfer site, said compounds are selected from group consisiting of Azoxystrobin, Kresoxim-methyl, Dimoxystrobin and Metominostrobin.

2.   A composition for control of phytopathogenic diseases on useful, that, in addition to inert formulation adjuvants, comprises as active ingredient a mixture of component (A) according to claim 1 and component (B) according to claim 1; wherein the weight ratio of component (A) to component (B) is from 50 : 1 to 1 : 50; with the proviso that if further compounds are present, which act at the $bc_1$ complex of the fungal mitochondrial respiratory electron transfer site, said compounds are selected from group consisiting of Azoxystrobin, Kresoxim-methyl, Dimoxystrobin and Metominostrobin.

3.   A method of controlling phytopathogenic diseases on useful plants, which comprises applying to the useful plants or the locus thereof a composition according to claim 1.

4.   A method according to claim 3, wherein the useful plants are cereal plants.

5.   A method according to claim 5, wherein the useful plants are wheat.

6.   A method according to claim 5, wherein the phytopathogenic disease is a disease selected from the group consisting of Erysiphe graminis, Pseudocercosporella herpotrichoides, Puccinia recondita, Puccinia striiformis, Pyrenophora tritici-repentis and Septoria tritici.

7.   A method according to claim 6, wherein the phytopathogenic disease is Septoria tritici.

| | European Patent Office | EUROPEAN SEARCH REPORT | Application Number |
|---|---|---|---|
| | | | EP 06 00 8895 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | JP 2001 072512 A (MITSUI CHEMICALS INC) 21 March 2001 (2001-03-21) and English translation on http://dossier1.ipdl.ncipi.go.jp<br>* paragraphs [0004] - [0006] *<br>Compound 10.<br>* paragraph [0019]; compound 2 *<br>* paragraphs [0020], [0021] *<br>----- | 1-7<br><br>1-7 | INV.<br>A01N43/56<br>A01N43/653 |
| D,X<br><br>Y | WO 2006/036827 A (E.I. DUPONT DE NEMOURS AND COMPANY; FOOR, STEPHEN, RAY) 6 April 2006 (2006-04-06)<br>* page 3, lines 20-24 *<br>* page 6, line 37 - page 7, line 4 *<br>* page 13, line 35 - page 14, line 29 *<br>----- | 1-7<br><br><br>1-7 | |
| A | EP 0 737 682 A (MITSUI TOATSU CHEMICALS, INCORPORATED; MITSUI CHEMICALS, INC) 16 October 1996 (1996-10-16)<br>* example 14 *<br>* page 20, lines 6-9 *<br>----- | 1-7 | TECHNICAL FIELDS SEARCHED (IPC) |
| E | DATABASE WPI Week 200658 Derwent Publications Ltd., London, GB; AN 2006-569245 XP002402590 & WO 2006/082723 A1 (MITSUI CHEM INC) 10 August 2006 (2006-08-10)<br>* abstract *<br>----- | 1-7 | A01N |

The present search report has been drawn up for all claims

| Place of search | Date of completion of the search | Examiner |
|---|---|---|
| Munich | 11 October 2006 | ROMANO-GOETSCH, R |

## ANNEX TO THE EUROPEAN SEARCH REPORT
## ON EUROPEAN PATENT APPLICATION NO.

EP 06 00 8895

This annex lists the patent family members relating to the patent documents cited in the above-mentioned European search report.
The members are as contained in the European Patent Office EDP file on
The European Patent Office is in no way liable for these particulars which are merely given for the purpose of information.

11-10-2006

| Patent document cited in search report | | Publication date | Patent family member(s) | | Publication date |
|---|---|---|---|---|---|
| JP 2001072512 | A | 21-03-2001 | NONE | | |
| WO 2006036827 | A | 06-04-2006 | NONE | | |
| EP 0737682 | A | 16-10-1996 | CA | 2173788 A1 | 12-10-1996 |
| | | | CN | 1146993 A | 09-04-1997 |
| | | | DE | 69618370 D1 | 14-02-2002 |
| | | | DE | 69618370 T2 | 26-09-2002 |
| | | | ES | 2169773 T3 | 16-07-2002 |
| | | | KR | 201426 B1 | 15-06-1999 |
| | | | US | 5747518 A | 05-05-1998 |
| WO 2006082723 | A1 | 10-08-2006 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006036827 A
- WO 0215701 A
- WO 03018810 A
- EP 0374753 A
- WO 9307278 A
- WO 9534656 A
- EP 0427529 A
- EP 451878 A
- WO 03052073 A

- EP 0367474 A
- EP 0401979 A
- WO 9013651 A
- EP 0392225 A
- WO 95133818 A
- EP 0353191 A
- WO 9513381 A
- WO 03000906 A

**Non-patent literature cited in the description**

- The Pesticide Manual. The Pesticide Manual - A World Compendium. The British Crop Protection Council
- *Angew. Chem. Int. Ed.,* 1999, vol. 38, 1328-1349
- *Pest Management Science,* 2002, vol. 58, 649-662

- *J. Biol. Chem.,* 1989, vol. 264, 14543-48
- *Methods Enzymol.,* 1986, vol. 126, 253-71
- **COLBY, S.R.** Calculating synergistic and antagonistic responses of herbicide combination. *Weeds,* 1967, vol. 15, 20-22